# EUROPEAN PATENT APPLICATION

(11) **EP 4 559 795 A1**
(43) Date of publication of application: **28.05.2025**
(21) Application number: 23211310.0
(22) Date of filing: 21.11.2023
(51) Int. Cl.: B62M 3/08

(54) **BICYCLE PEDAL**

(71) Applicant: Golec, Marcin, London SW19 2RR (GB)
(72) Inventor: Golec, Marcin, London SW19 2RR (GB)
(74) Representative: Farago-Schauer, Peter Andreas

(57) **Abstract**

The present invention concerns a flat bicycle pedal comprising: a pedal body housing (7), the pedal body housing (7) having a housing longitudinal axis (B) and holding therein: a pedal axle (1) having an axle longitudinal axis (A), an inner bushing assembly (3) rotatably attached to the pedal axle (1) at an inner end (16) of the pedal axle (1), the inner bushing assembly (3) holding the pedal axle (1) in a rotatable manner around the axle longitudinal axis (A), wherein the inner bushing assembly (3) is arranged in the pedal body housing (7) such as to allow the swinging of the pedal body housing (7) at least on a swing plane around a swing axis (X) at the inner end (16) of the pedal axle (1) from a neutral position, wherein the housing longitudinal axis (B) is coincident with the axle longitudinal axis (A), to a swung position, wherein the housing longitudinal axis (B) forms an angle with the axle longitudinal axis (A), and an outer bushing assembly (4) comprising: an axle member (5A) rotatably attached to the pedal axle (1) at an outer end (12) of the pedal axle (1), the outer end (12) of the pedal axle (1) being opposite to the inner end (16) of the pedal axle (1), and a brake shoe member (5B) seated in the pedal body housing (7) in a position facing the axle member (SA), wherein the brake shoe member (5B) frictionally engages the axle member (5A), such that the frictional engagement between the axle member (SA) and the shoe member (5B) restrains the movement of the pedal body housing (7) about the swing axis (X).

## Description

### BACKGROUND OF THE INVENTION

The present invention is directed to an improved bicycle pedal, in particular a flat bicycle pedal with the capability of allowing the feet and the sole of the shoe of a cyclist to swing with the pedal body as the cyclist is pedaling.

### BACKGROUND ART

Generally, bicycle pedals are well known in the art and basically there are two types of bicycle pedals.

One type of bicycle pedal is known as the clipless pedal, wherein the cyclist needs to wear a special shoe with a cleat which is clipped into the bicycle pedal, hence forming a firm connection between the sole of the shoe of the cyclist and the clipless pedal.

Another type of bicycle pedal is the flat pedal, wherein the cyclist merely places any conventional shoe on the pedal and is ready to go.

Furthermore, it is well known in art that when a cyclist pedals, he/she tries to constantly adjust the position of his/her knees, ankles, feet and heels based on the load to the drivetrain of the bicycle and this is a cause of constant fatigue.

Clipless pedals allow for a few degrees of movement of the heel of the cyclist to the inside and outside making the pedaling more comfortable, as the movement allows the foot of the cyclist to find a more comfortable position. Such even limited movement is particularly helpful when the cycling conditions or the condition of the cyclist change (uphill, flat, more tired etc.).

With flat pedals there is no such adjustment mechanism and in order to change the position of the foot on the pedal, the cyclist needs to lift his/her foot and position it differently on the pedal. The problem is that particularly in technical or difficult terrain, lifting the foot from the pedal is not a good idea as it may be dangerous. Besides, it is unlikely that a cyclist will reposition his/her foot in the right position with the first attempt to reposition the foot on the pedal, as the changes are under certain circumstances rather small, on the order of 1 degree to 4 degrees. In fact, in numerous cases, it has been found that repositioning the foot on the pedal by a rotation of the foot on the order of 1 degree to 4 degrees is sufficient to make cycling comfortable. Repeating the repositioning to attain a comfortable rotation angle for the feet of the cyclist is thus cumbersome and dangerous.

Accordingly, there is a need for a reliable mechanism in the bicycle pedal allowing a cyclist to put his/her feet on a flat pedal and swing the pedal with respect to the pedal axle without lifting the foot from the pedal. Such swing motion would lead to a rotation of the foot with respect to the pedal axle with flat pedals similar to the rotation which is possible with clipless pedals.

US20210347438 A1 describes a biomechanical cycling pedal assembly including a pedal body configured to slide and pivot on a horizontal rotational axis formed by an axle, a roller bearing, and a spherical rolling joint. The spherical rolling joint has an axial thread which is threaded to a matching thread on the axle. The biomechanical pedal can be configured to pivot according to a cyclist's individually changing toe orientation throughout a crank rotation by displacing the spherical rolling joint forward or rearward on the axial thread. The spherical rolling joint is designed to convert the forward or rearward displacement thereof on the axial thread into a movement to the left or to the right of the axis of the axle, the left and right movements of the spherical rolling joint resulting in a matching movement of the pedal platform. While US20210347438 A1 allows a pivot of the pedal according to a cyclist's individually changing toe orientation, the pivoting motion and position cannot be set while the cyclist is riding the bicycle; in fact, the cyclist has to dismount in order to reorient the pedal by using a tool.

US11713094B2 discloses a pedal body member adapted for transverse or side-to-side rotatable movement relative to a longitudinal axis of the axle shaft. The pedal body member is self-centering and includes one or more springs such as coil, leaf, cantilever or torsion springs to apply force to move the pedal body member towards a home or resting position relative to the axle shaft. However, whenever the cyclist lifts his/her foot from the pedal body member the cyclist has to reposition his/her foot on the pedal body and this process is tedious and causes fatigue.

Furthermore, as in US 11713094B2 the springs constantly try to reposition the pedal body housing to be axially aligned with the pedal axle when the shoe is on the pedal, this leads to severe pain in the knees of the cyclists because the springs always exert a rotational force onto the leg and foot of the cyclist. It is a well-documented issue in clipless pedals that when the cleat in the shoe is wrongly positioned and the pedal itself tries to reposition the cleat to be in the resting straight position, this forces the cyclist to counter that force with muscles and tendons leading to fatigue and pain.

### OBJECTS AND SUMMARY OF THE INVENTION

Accordingly, it is an object of the present invention to provide for a reliable mechanism in a flat bicycle pedal allowing a cyclist to swing the pedal with respect to the pedal axle during the ride without lifting the foot from the pedal, such that the pedal is effortlessly maintained in the position chosen by the cyclist.

A further object of the present invention is to provide for a reliable mechanism in a flat bicycle pedal, allowing a cyclist to swing the pedal with respect to the pedal axle during the ride in a precise manner.

The above objects as well as further objects and aims which will become apparent hereinafter are achieved by a bicycle pedal as defined in claim 1.

Further advantageous features of the present invention are defined in the appended dependent claims.

The features and advantages of the present invention will become clearer from the following detailed description of the preferred embodiment thereof, made with reference to the attached drawings.

### DESCRIPTION OF THE DRAWINGS

Figure 1 is an exploded view generally showing the basic components of a bicycle pedal including the improvement according to the present invention embodied as a flat pedal;
Figure 2 is a front view as seen along a longitudinal axis of a pedal axle of the bicycle pedal of Fig. 1;
Figure 3 is a top view of the bicycle pedal of Fig. 1 or Fig. 2 showing the improvement of the present invention in a schematic manner;
Figure 4 is a cross section along the line IV-IV of Fig. 2 showing one currently preferred embodiment of the improvement of the present invention;
Figure 5 is a further exploded view generally showing some of the basic components of the bicycle pedal of Fig. 1 and including the improvement according to the present invention;
Figure 6 is a further exploded view showing the currently preferred embodiment of the improvement of the present invention of Fig. 4; and
Figure 7 is a further exploded view showing the currently preferred embodiment of the improvement of the present invention of Fig. 4 and Fig. 6.

### DETAILED DESCRIPTION OF THE PREFERRD EMBODIMENTS

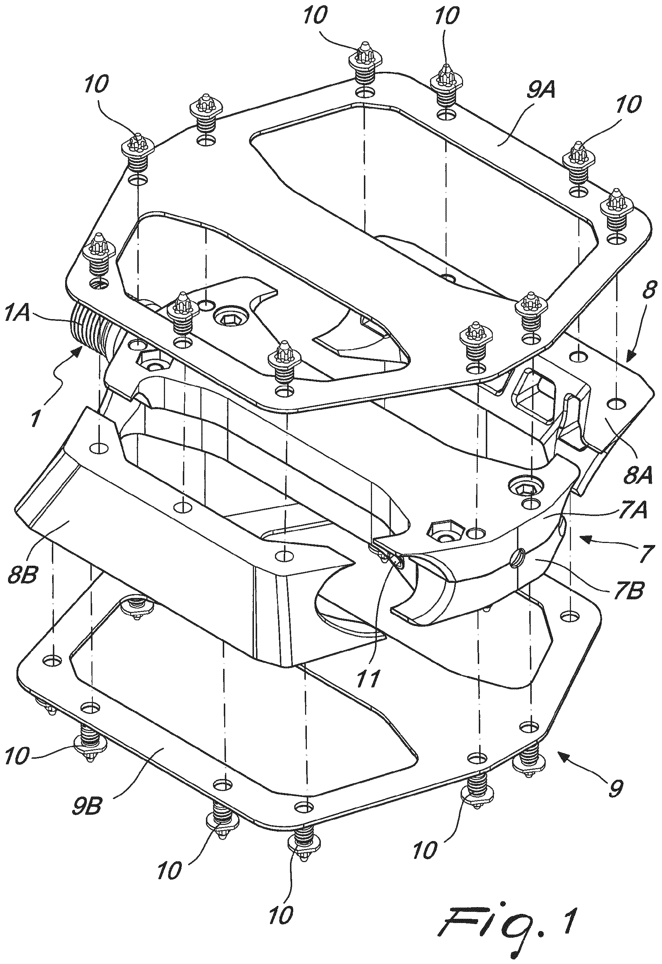

In the following, the present invention will be described in detail in connection with the currently preferred embodiments thereof and with reference to the appended Figures 1 to 7.

As shown in Fig. 1 a flat bicycle pedal including the improvements of the present invention comprises a pedal body housing 7, the pedal body housing 7 having a housing longitudinal axis B. The pedal body housing 7 is preferably made of a composite material including a polymer. Preferably the pedal body housing 7 is made by injection molding with a process wherein the polymer is melted and injected into a suitable mold. While the bicycle pedal of Figures 1 to 7 is embodied as a flat pedal, embodiments of the bicycle pedal as a clipless pedal are also envisaged.

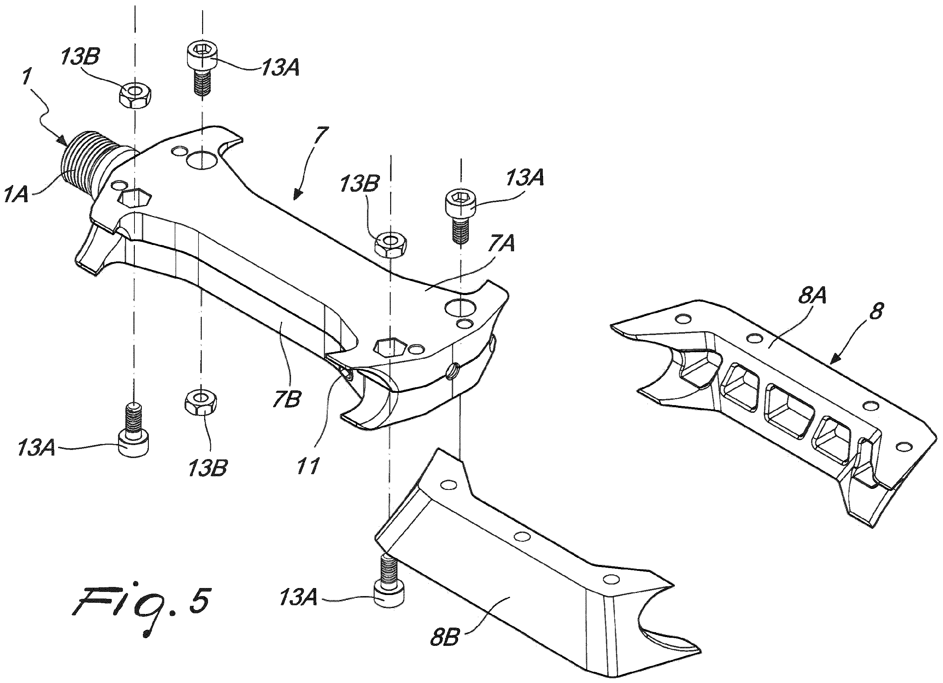

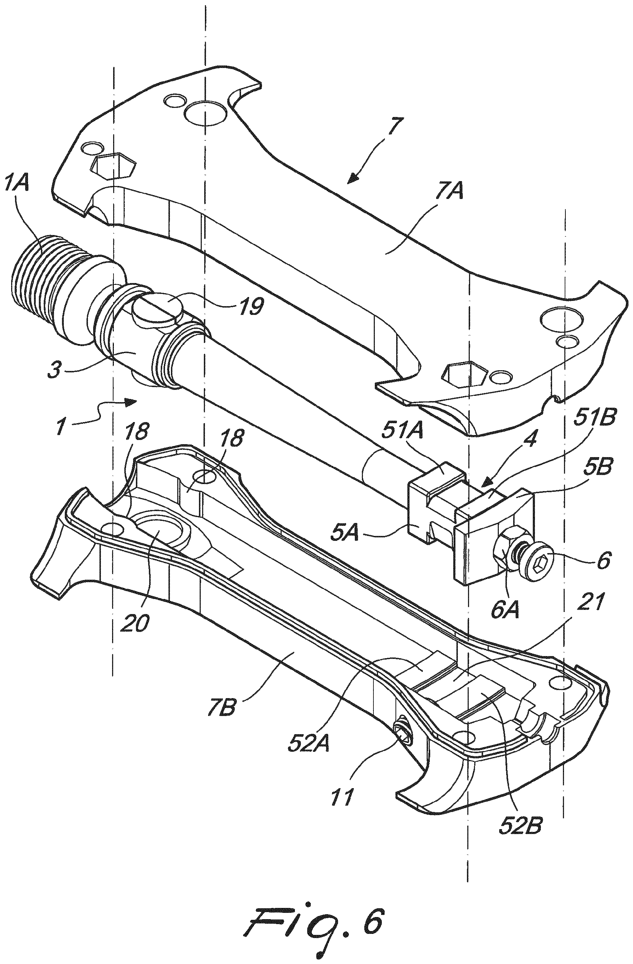

The pedal body housing 7 is formed of a first pedal body housing section 7A defining a first face of the pedal body housing 7 and providing for a support for a shoe sole of a cyclist on the flat bicycle pedal, and a second pedal body housing section 7B defining a second face of the pedal body housing 7 and providing for a support for a shoe sole of a cyclist on the flat bicycle pedal. As can best be seen in Fig. 5 or Fig. 6 both pedal body housing sections 7A and 7B have substantially flat faces facing outwardly of the pedal body housing 7 to provide for an optimal support surface for the shoe sole of a cyclist or for a pedal body platform plate 9 which is described in further detail hereinafter. In the case where the pedal body housing 7 is directly supporting the shoe sole of a cyclist, the two opposing faces are devised as non-slip surfaces. Otherwise, the pedal body platform plate 9 provides for the non-slip surfaces.

Preferably, the shape of the pedal body housing 7 is widened at its respective ends so that the overall shape of the pedal body housing 7 resembles that of a double anchor or a double T. In other words, the shape of the housing 7 resembles, preferably, two opposing anchors or two opposing letters T.

The first and second pedal body housing sections 7A and 7B are separably connected by fastening means 13A and 13B. Preferably, the fastening means for the pedal body housing are embodied as fastening screws 13A and nuts 13B. However, equivalent fastening means which are known to the person skilled in the art are equally envisaged as being part of the present disclosure. Equally preferably, the fastening means 13A and 13B do not extend beyond or are flush with the outwardly facing flat faces of the pedal body housing 7 in the assembled state thereof.

The pedal body housing 7 is devised to hold therein a pedal axle 1 having an axle longitudinal axis A.

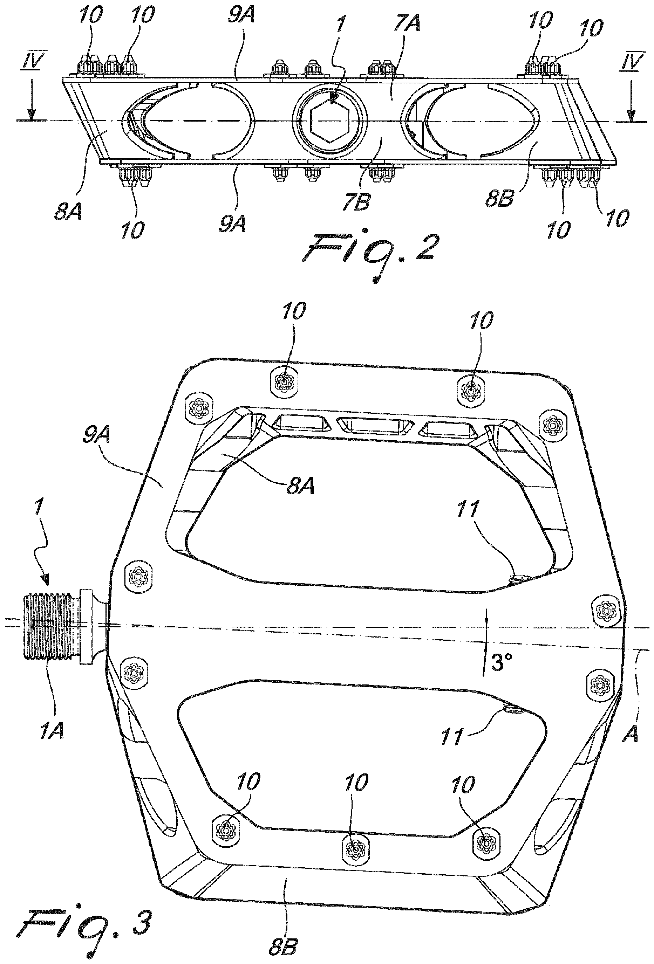

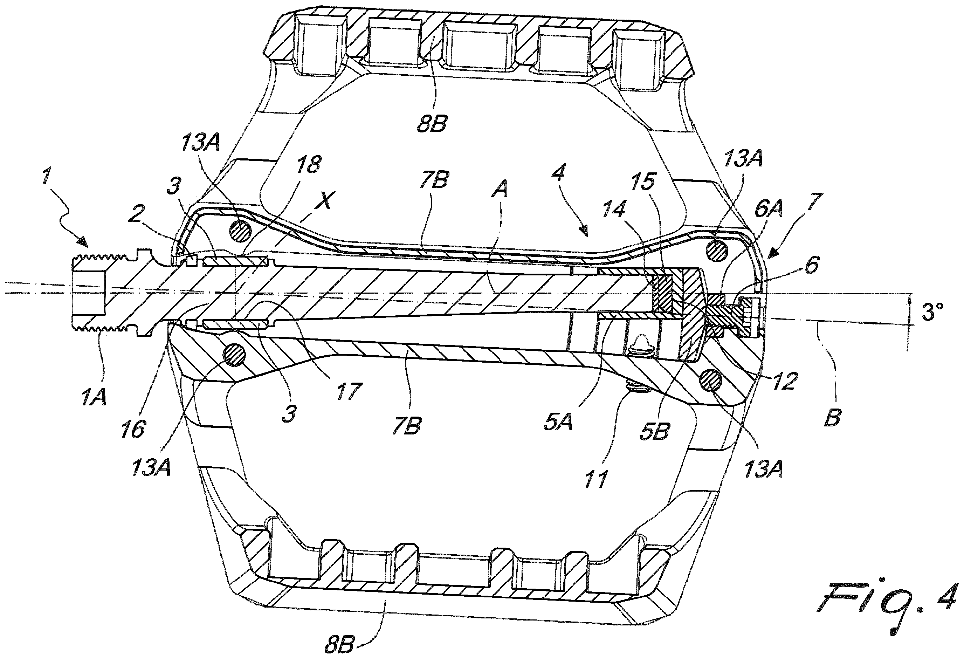

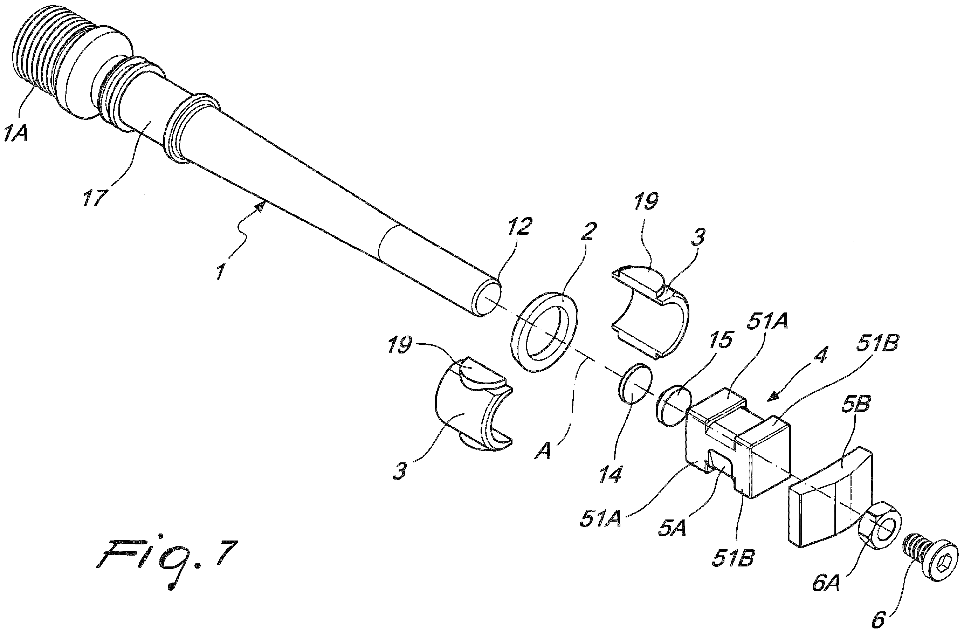

As can best be seen in Figures 4, 6 and 7, the pedal axle 1 has a substantially tubular shape and an inner end 16 which is close to the bicycle crank in the attached state of the pedal axle 1 and an outer end 12 which is opposite to the inner end 16. The pedal axle 1 comprises a pedal crank attachment section 1A arranged adjacent to the inner end 16 of the pedal axle 1 in order to allow the attachment of the flat bicycle pedal to a bicycle crank (not shown). As can best be seen in Fig. 3 or Fig. 4, the pedal body housing 7 has an opening at the inner end 16 of the pedal axle 1 from which the pedal crank attachment section 1A extends externally of the pedal body housing 7. The outer end 12 of the pedal axle 1 is not threaded and is rotatably held, as described hereinafter. As shown in Fig. 1 and Fig. 7, for example, a bearing seal 2 is provided at the inner end 16 of the pedal axle 1.

With further reference to Figures 4, 6 and 7, the inner end 16 of the pedal axle 1 is rotatably held by an inner bushing assembly 3, the inner bushing assembly 3 holding the pedal axle 1 in a rotatable manner substantially around the axle longitudinal axis A. The inner bushing assembly 3 is held on the pedal axle 1 in such a manner that a displacement of the inner bushing assembly 3 along the axle longitudinal axis A is substantially impeded. Preferably, the inner bushing assembly 3 is retained in a suitably dimensioned recess 17 of the pedal axle 1.

Advantageously, the inner bushing assembly 3 is embodied as a slider bushing. Further preferably, as is known to the person skilled in the art, the inner bushing assembly 3 or the slider bushing is made of a suitable polymer or the like which allows the inner bushing assembly 3 or the slider bushing to swivel or oscillate, as discussed hereinbelow. Teflon is currently envisaged as a preferred polymer due to its ability to withstand a large number of swivel or oscillation cycles.

As shown for instance in Fig. 4 or Fig. 6, the inner bushing assembly 3 is arranged in the pedal body housing 7 such as to allow the swinging of the pedal body housing 7 at least on a swing plane around a swing axis X at the inner end 16 of the pedal axle 1 from a neutral position, wherein the housing longitudinal axis B is coincident with the axle longitudinal axis A, to a swung position, wherein the housing longitudinal axis B forms an angle with the axle longitudinal axis A. The swing axis X is preferably substantially perpendicular to the axle longitudinal axis A.

Preferably the inner bushing assembly 3 is arranged in the pedal body housing 7 such as to allow the swinging of the pedal body housing 7 on the swing plane around a swing axis X at the inner end 16 of the pedal axle 1 from the neutral position, wherein the housing longitudinal axis B is coincident with the axle longitudinal axis A, to the swung position, wherein the housing longitudinal axis B forms an angle with the axle longitudinal axis A. The swing axis X is preferably substantially perpendicular to the axle longitudinal axis A.

Preferably, the pedal body housing 7 includes protrusions 18 arranged (in the assembled state of the pedal axle 1) at the inner end 16 of the pedal axle 1, the protrusions 18 allowing the oscillation of the pedal body housing 7 substantially within a cone having its tip at the swing axis X. Preferably, the protrusions 18 are provided in each pedal body housing section 7A and 7B and are parts of the lateral surfaces of respective cylinders.

Advantageously, as can best be seen in Fig. 6, the inner bushing assembly 3 includes two opposing pivot elements 19 adapted to cooperate with matching bearings 20 provided in each pedal body housing section 7A and 7B such that, in the assembled state of the pedal axle 1, the oscillation of the pedal body housing 7 is limited to the swing plane around a swing axis X. In other words, the pivot elements 19 and the matching bearings 20 limit the movement of the pedal body housing 7 to one degree of freedom of movement along a circular arc segment. In the above advantageous arrangement, the inner bushing assembly 3 can be made of two symmetrical parts, each symmetrical part including a portion of the opposing pivot elements 19 such that the assembly of the inner bushing assembly 3 to the pedal axle 1 is facilitated, as the opposing pivot elements 19 can be snugly held in the matching bearings 20 preventing thus the separation of the symmetrical parts of the inner bushing assembly 3. Nevertheless, a person skilled in the art will appreciate that the symmetrical parts of the inner bushing assembly 3 can be otherwise joined and/or that the parts of the inner bushing assembly 3 do not need to be symmetrical at all, particularly, but not only in the case wherein the opposing pivot elements 19 and the matching bearings 20 are omitted.

With renewed reference to Figures 4, 6 and 7, an outer bushing assembly 4 is provided at the outer end 12 of the pedal axle 1. The outer bushing assembly 4 comprises an axle member 5A rotatably attached to the pedal axle 1 at the outer end 12 of pedal axle 1; and a brake shoe member 5B is seated in the pedal body housing 7 in a position facing the axle member 5A. In the assembled state of the pedal axle 1, the brake shoe member 5B frictionally engages the axle member 5A, such that the frictional engagement between the axle member 5A and the shoe member 5B restrains the movement of the pedal body housing 7 about the swing axis X. Advantageously, providing the outer bushing assembly 4 at the outer end 12 of the pedal axle 1 (and at the outer end of the pedal body housing 7) avoids the bulky arrangements of the prior art, wherein the swinging mechanism is provided in the middle of the pedal.

Preferably, the axle member 5A is a slider bushing and its materials are similar to the materials of the inner bushing assembly 3. Also preferably, the surface of the axle member 5A facing the brake shoe member 5B is made of a material suitable to frictionally engage the brake shoe member 5B and may be a material different from that of the remainder of the axle member 5A.

Advantageously, the brake shoe member 5B is made of polymer and/or metal and at least its surface facing the axle member 5A is made of a material suitable to frictionally engage the axle member 5A.

According to a particularly advantageous aspect of the present invention, the frictional engagement between the axle member 5A and the shoe member 5B restrains the movement of the pedal body housing 7 about the swing axis X such that the movement of the pedal body housing 7 about the swing axis X is only possible once a predefined threshold force has been overcome. In this way, the pedal body housing 7 remains in the position into which it was moved by a cyclist even if the cyclist lifts his shoe from the pedal. In other words, the cyclist can swing the pedal body housing 7 about the swing axis X into an optimal position for cycling using a force exceeding the predefined threshold force and the optimal position will be maintained until a force exceeding the predefined threshold force will be applied again to the pedal even if the cyclist lifts his shoe from the pedal. Thus, any position within a given swing angle can be assumed by the pedal body housing 7 and that position will be maintained until a force exceeding the predefined threshold force will be applied by the cyclist to the pedal body housing 7.

According to another advantageous aspect of the invention, the frictional engagement between the axle member 5A and the shoe member 5B restrains the movement of the pedal body housing 7 about the swing axis X such that the movement of the pedal body housing 7 about the swing axis X is slowed down. In this way the motion of the pedal body housing 7 can be better controlled to achieve the optimal position.

The advantageous aspect of restraining the movement of the pedal body housing 7 about the swing axis X such that the movement of the pedal body housing 7 about the swing axis X is only possible once the predefined threshold force has been overcome, and the aspect of restraining the movement of the pedal body housing 7 about the swing axis X such that the movement of the pedal body housing 7 about the swing axis X is slowed down, can be combined or provided independently.

The outer bushing assembly 4 further advantageously comprises an adjustment member 6 arranged to be in contact with the shoe member 5B, the adjustment member 6 being displaceable along the housing longitudinal axis B to adjust the amount of friction between the axle member 5A and the shoe member 5B. Accordingly, the adjustment member 6 modulates the amount of friction between the axle member 5A and the shoe member 5B, such that it can slow down the relative movement between the axle member 5A and the shoe member 5B to be more resistive or to stop the movement completely if sufficient force is exerted via the adjustment member 6 and the shoe member 5B on the axle member 5A by axially displacing the adjustment member 6 and the shoe member 5B.

The adjustment member 6 is preferably embodied as an adjustment screw accommodated in the pedal body housing 7 which is accessible through an axial opening of the pedal body housing 7, the adjustment screw cooperating with a screw nut 6A embedded in the pedal body housing 7.

The outer bushing assembly 4 further advantageously comprises at least one adjustment means 11 for adjusting the extent of swinging or the swing angle of the pedal body housing 7 on the swing plane around the swing axis X, the at least one adjustment means 11 being arranged in the pedal body housing 7 and being displaceable in a direction substantially perpendicular to the housing longitudinal axis B.

In a particularly advantageous embodiment, the outer bushing assembly 4 further comprises two adjustment means 11 for independently adjusting the extent of swinging or the swing angle of the pedal body housing 7 on the swing plane around the swing axis X, the adjustment means 11 being arranged symmetrically in the pedal body housing 7 and being displaceable in a direction substantially perpendicular to the housing longitudinal axis B. The symmetrical arrangement of the two adjustment means 11 makes it possible to independently adjust the swing angle on each side of the axle longitudinal axis A.

Preferably, the adjustment means 11 is embodied as a bolt engaging in a threading manner the pedal body housing 7 and acting on a lateral face of the axle member 5A.

Preferably, the angle of adjustment settable with the adjustment means 11 on one side of the axle longitudinal axis A is between 0 degrees and 10 degrees, more preferably between 4 degrees and 10 degrees. A further preferred range is less than 20 degrees on one side of the axle longitudinal axis A. However, the person skilled in the art will appreciate that the angle of adjustment may vary as need be. In fact, if the angle of adjustment is set to 0 degrees, this corresponds to a regular pedal with no swinging of the pedal body housing 7. If the cyclist wants to have the swinging of the pedal body housing 7 allowed only from one side of the axle longitudinal axis A to fit the cyclist's preference and abilities, this can be achieved by setting one of the adjustment means 11 to 0 degrees. With the spring solution in the prior art this is not possible because springs can always be compressed by the same amount of distance.

The axle member 5A is preferably held in the pedal body housing 7 with one degree of freedom of movement in a seat 21, as can best be seen in Fig. 4 and Fig. 6, the degree of freedom of movement being substantially transversal to the axle longitudinal axis A.

Further, preferably, respective opposing seats 21 are provided in the first pedal body housing section 7A and the second pedal body housing section 7B and the axle member 5A is substantially H shaped, as seen in a side view, as can best be seen in Fig. 6 or Fig. 7, to cooperate with the respective opposing seats 21.

The seats 21 are delimited by respective first and second protrusions 52A and 52B of the pedal body housing 7 which cooperate with respective first and second arms 51A and 51B of the H-shaped axle member 5A so as to hold the axle member 5A with the above mentioned one degree of freedom of movement in the respective seats 21 of the pedal body housing 7. Advantageously, the arms 51A are held between the protrusions 52A and 52B while the arms 51B are immediately adjacent to the protrusions 52B.

In an advantageous embodiment the adjustment member 6 modulates the amount of friction between the axle member 5A and the shoe member 5B and between the axle member 5A and the first and second pedal body housing sections 7A and 7B. The amount of friction between the axle member 5A and the shoe member 5B is controlled as described above 5A by axially displacing the adjustment member 6 and the shoe member 5B. The amount of friction between the axle member 5A and the first and second pedal body housing sections 7A and 7B is also modulated by axially displacing the adjustment member 6 and the shoe member 5B. However, in the latter advantageous embodiment the axle member 5A is held with an additional degree of freedom of movement in the seat 21 of the pedal body housing 7 which extends in an axial direction along the axle longitudinal axis A. The additional degree of freedom of movement is rather limited and may be provided for instance by the elasticity of the axle member 5A and/or the shoe member 5B and/or the seating thereof. In practice, an axial displacement of 0,5 mm provided by a subsequently described spacer pad 15 the axle member 5A may be sufficient.

In this way the amount of friction between the first protrusions 52A and the respective first arms 51A and/or the amount of friction between the second protrusions 52B and the respective second arms 51B can be controlled equally by the axial displacement of the adjustment member 6 and the shoe member 5B

The outer bushing assembly 4 further advantageously comprises a first spacer pad 14 interposed between the outer end 12 of the pedal axle 1 and the axle member 5A, and further preferably comprises a second spacer pad 15 interposed between the first spacer pad 14 and the axle member 5A. The first spacer pad 14 is preferably made of a polymer, for example Teflon, so as to provide for a suitable engagement surface in the rotation of the pedal axle 1 in the axle member 5A, and the second spacer pad 15 is preferably made of a rubber which provides advantageously for a damping effect. In the context of the present invention either the first spacer pad 14 or the second spacer pad 15 or both spacer pads 14 and 15 can be provided.

With further reference to Figures 1 to 3, the flat bicycle pedal may further advantageously comprise a pedal body platform assembly 9 arranged on at least one face of the pedal body housing 7, the pedal body platform assembly 9 being provided with mounting pins 10 for securing the pedal body platform assembly 9 to the pedal body housing 7 and/or for allowing a non-slip support for a shoe sole of a cyclist on the pedal body platform assembly 9.

Further preferably, the pedal body platform assembly 9 comprises a first pedal body platform plate 9A arranged on one face of the pedal body housing 7 and a second pedal body platform plate 9B arranged on an opposite face of the pedal body housing 7, the first pedal body platform plate 9A and the second pedal body platform plate 9B being provided with respective mounting pins 10 for securing the first pedal body platform plate 9A and the second pedal body platform plate 9B to the pedal body housing 7 and/or for allowing a non-slip support for a shoe sole of a cyclist on the first pedal body platform plate 9A and on the second pedal body platform plate 9B.

With further reference to Figures 1 to 3, the flat bicycle pedal further advantageously comprises at least one pedal body spacer 8 arranged on one side of the pedal body housing 7 and sandwiched between the first pedal body platform plate 9A and the second pedal body platform plate 9B, wherein the mounting pins 10 secure the at least one pedal body spacer 8 to the first and second pedal body platform plates 9A and 9B, wherein preferably the pedal body spacer 8 comprises a first pedal body spacer element 8A arranged on one side of the pedal body housing 7 and a second pedal body spacer element 8B arranged on the opposite side of the pedal body housing 7.

The pedal body spacer 8, the pedal body spacer 8A and/or the second pedal body spacer element 8B are advantageously made of the same material as the pedal body housing 7. Preferred composite materials are those including glass fiber and a polymer. Other preferred materials comprise carbon fiber and a polymer. Also composite materials including Teflon or Kevlar or natural fiber like cotton and a polymer are deemed to be useful. Preferred polymers are for instance PA6 or PA66. Composite material can have multiple materials plus polymer like for example carbon fiber with Kevlar fiber and polymer.

The pedal body platform assembly 9, the first pedal body platform plate 9A and/or the second pedal body platform plate 9B are advantageously made of metal, in particular stainless steel or titanium.

The polymer-metal pedal platform construction provided by the combination of the pedal body housing 7, the pedal body spacer 8 and the pedal body platform assembly 9 is particularly advantageous as it allows an optimal speeding of the force which is needed to change the position of the pedal body housing 7 with respect to the axle longitudinal axis A. Furthermore, the combination of the pedal body housing 7, the pedal body spacer 8 and the pedal body platform assembly 9 is particularly advantageous as it avoids hanging plastic parts on the outer end which could crack if force is applied to the pedal body housing 7.

The polymer-metal pedal platform construction provided by the combination of the pedal body housing 7, the pedal body spacer 8 and the pedal body platform assembly 9 is also particularly advantageous since it allows more flexion in the pedal that is beneficial for the foot. Metal plates of the body platform assembly 9 act as springs that deform under the pressing force from the shoe, hence slightly deforming and providing a better grip for the shoe which is a very important feature of the pedal. Prior art pedals usually have a very rigid one-piece aluminum or composite structure. This aspect of the invention can be provided independently of the other aspects pertaining to the swinging aspect of the pedal body housing 7.

Preferably, the first pedal body platform plate 9A and/or the second pedal body platform plate 9B have a concave shape. The concave shape can be obtained, for instance, by providing pedal body spacer elements 8A and 8B which are raised with respect to the pedal body housing 7. If the pedal body spacer elements 8A and 8B are at the same height (or have the same thickness) as the pedal body housing 7, the surface defined by the first pedal body platform plate 9A and the second pedal body platform plate 9B is flat. Thus, the pedal body spacer elements 8A and 8B advantageously allow "modulating" the concavity of the surface defined by the first pedal body platform plate 9A and the second pedal body platform plate 9B.

Preferably, the maximal swing angle of the pedal body housing 7 from the neutral position along the axle longitudinal axis A is at least 4 degrees in at least one direction on the swing plane around the swing axis X, and more preferably at least 10 degrees in at least one direction on the swing plane around the swing axis X and most preferably up to 20 degrees in at least one direction on the swing plane around the swing axis X. As has been discussed, the adjustment means 11 may be arranged on both sides of the neutral position so as to allow independent adjustment of a maximal swing angle in each direction on the swing plane.

According to a further preferred aspect, the axial length of the pedal axle 1 is more than 50% of the width of the pedal body platform assembly 9. The axial length of the pedal axle 1 advantageously makes it possible to accommodate the swinging at the end of the housing due to the additional available space. The longer pedal axle 1 of the present invention is advantageous from a structural point of view.

The present invention fully achieves its object and aims. The main benefit of the solution of the present invention versus the prior art is that the pedal body housing is capable of rotation without being moved itself back to the starting position when the shoe is lifted from the pedal. In prior art designs, as has been discussed, springs constantly try to reposition the pedal body housing to be axially aligned with the pedal axle when the shoe is on the pedal and also when the shoe is off the pedal. This leads to severe pain in the knees of the cyclists because the springs constantly exert a rotational force on the leg and foot of the cyclist. It is a well documented issue in clipless pedals when the cleat in the shoe is wrongly positioned and the pedal itself tries to reposition the cleat to be in the resting straight position - forcing the cyclist to counter that force with muscles and tendons leading to fatigue and pain.

While the invention herein has been described with respect to flat bicycle pedals its benefits are also applicable to clipless bicycle pedals since an additional amount of swinging of the bicycle pedal with respect to the pedal axle may be provided in clipless bicycle pedals.

The disclosure of the present invention includes all modifications and equivalents of the subject matter recited in the claims appended hereto as permitted by applicable law. Moreover, any combination of the elements described above in all possible variations thereof is encompassed by the disclosure unless indicated otherwise herein.

Where technical features mentioned in any claim are followed by reference signs, the reference signs have been included for the sole purpose of increasing the intelligibility of the claims and accordingly, neither the reference signs nor their absence have any limiting effect on the technical features as described above or on the scope of any claim elements.

One skilled in the art will realize that the disclosure may be embodied in other specific forms without departing from the disclosure or essential characteristics thereof. The foregoing embodiments are therefore in all respects to be considered illustrative rather than limiting to the disclosure described herein. The scope of the invention is thus indicated by the appended claims, rather than the foregoing description, and all changes that come within the meaning and range of equivalence of the claims are therefore intended to be embraced therein.

### LIST OF REFERENCE NUMERALS

- 1: pedal axle
- 1A: pedal crank attachment section
- 2: bearing seal
- 3: inner bushing assembly
- 4: outer bushing assembly
- 5A: axle member
- 5B: brake shoe member
- 6: adjustment screw for the brake shoe member
- 6A: screw nut for the adjustment screw
- 7: pedal body housing
- 7A: first pedal body housing section
- 7B: second pedal body housing section
- 8: pedal body spacer
- 8A: first pedal body spacer element
- 8B: second pedal body spacer element
- 9: pedal body platform assembly
- 9A: first pedal body platform plate
- 9B: second pedal body platform plate
- 10: mounting pins
- 11: adjustment means / bolts
- 12: outer end of the pedal axle
- 13A: fastening screw for the pedal body housing
- 13B: nut for the pedal body housing
- 14: first spacer pad
- 15: second spacer pad
- 16: inner end of the pedal axle
- 17: recess of the pedal axle
- 18: protrusion of the pedal body housing
- 19: opposing pivot elements of the inner bushing assembly
- 20: matching bearings of the pedal body housing
- 21: seat of the pedal body housing
- 51A: first arm of the axle member
- 51B: second arm of the axle member
- 52A: first protrusion of the recess
- 52B: second protrusion of the recess
- A: axle longitudinal axis
- B: housing longitudinal axis
- X: swing axis

## Claims

1. A flat bicycle pedal comprising:
a pedal body housing (7), the pedal body housing (7) having a housing longitudinal axis (B) and holding therein:
a pedal axle (1) having an axle longitudinal axis (A),
an inner bushing assembly (3) rotatably attached to the pedal axle (1) at an inner end (16) of the pedal axle (1), the inner bushing assembly (3) holding the pedal axle (1) in a rotatable manner around the axle longitudinal axis (A), wherein the inner bushing assembly (3) is arranged in the pedal body housing (7) such as to allow the swinging of the pedal body housing (7) at least on a swing plane around a swing axis (X) at the inner end (16) of the pedal axle (1) from a neutral position, wherein the housing longitudinal axis (B) is coincident with the axle longitudinal axis (A), to a swung position, wherein the housing longitudinal axis (B) forms an angle with the axle longitudinal axis (A), and
an outer bushing assembly (4) comprising:
an axle member (5A) rotatably attached to the pedal axle (1) at an outer end (12) of the pedal axle (1), the outer end (12) of the pedal axle (1) being opposite to the inner end (16) of the pedal axle (1), and
a brake shoe member (5B) seated in the pedal body housing (7) in a position facing the axle member (5A),
wherein the brake shoe member (5B) frictionally engages the axle member (5A), such that the frictional engagement between the axle member (5A) and the shoe member (5B) restrains the movement of the pedal body housing (7) about the swing axis (X).

2. The flat bicycle pedal of claim 1, wherein the frictional engagement between the axle member (5A) and the shoe member (5B) restrains the movement of the pedal body housing (7) about the swing axis (X) such that the movement of the pedal body housing (7) about the swing axis (X) is only possible once a predefined threshold force has been overcome, and/or wherein the frictional engagement between the axle member (5A) and the shoe member (5B) restrains the movement of the pedal body housing (7) about the swing axis (X) such that the movement of the pedal body housing (7) about the swing axis (X) is slowed down.

3. The flat bicycle pedal of claim 1 or 2, wherein the outer bushing assembly (4) further comprises an adjustment member (6) arranged to be in contact with the shoe member (5B), the adjustment member (6) being displaceable along the housing longitudinal axis (B) to adjust the amount of friction between the axle member (5A) and the shoe member (5B), the adjustment member (6) being preferably an adjustment screw.

4. The flat bicycle pedal of one or more of the preceding claims, wherein the outer bushing assembly (4) further comprises at least one adjustment means (11) for adjusting a swing angle of the pedal body housing (7) on the swing plane around the swing axis (X), the at least one adjustment means (11) being arranged in the pedal body housing (7) and being displaceable in a direction substantially perpendicular to the housing longitudinal axis (B), and wherein preferably the outer bushing assembly (4) further comprises two adjustment means (11) for independently adjusting a swing angle of the pedal body housing (7) on the swing plane around the swing axis (X), the adjustment means (11) being arranged symmetrically in the pedal body housing (7) and being displaceable in a direction substantially perpendicular to the housing longitudinal axis (B) such as to independently adjust the swing angle on each side of the axle longitudinal axis (A), wherein preferably the adjustment means (11) is embodied as a bolt.

5. The flat bicycle pedal of one or more of the preceding claims, wherein the pedal axle (1) further comprises a pedal crank attachment section (1A) arranged adjacent to the inner end (16) of the pedal axle (1) in order to allow the attachment of the flat bicycle pedal to a bicycle crank.

6. The flat bicycle pedal of one or more of the preceding claims, wherein the pedal body housing (7) is substantially flat and has two opposing faces, the two opposing faces preferably providing for a non-slip support for a shoe sole of a cyclist on the flat bicycle pedal.

7. The flat bicycle pedal of one or more of the preceding claims, wherein the pedal body housing (7) is formed of:
a first pedal body housing section (7A) defining a first face of the pedal body housing (7) and preferably providing for a support for a shoe sole of a cyclist on the flat bicycle pedal, and
a second pedal body housing section (7B) defining a second face of the pedal body housing (7) and preferably providing for a support for a shoe sole of a cyclist on the flat bicycle pedal,
wherein the first and second pedal body housing sections (7A, 7B) are separably connected by fastening means (13A, 13B).

8. The flat bicycle pedal of one or more of the preceding claims, wherein the pedal body housing (7) has an opening at the inner end (16) of the pedal axle (1) from which the pedal crank attachment section (1A) extends externally of the pedal body housing (7).

9. The flat bicycle pedal of one or more of the preceding claims, wherein the flat bicycle pedal comprises a pedal body platform assembly (9) arranged on at least one face of the pedal body housing (7), the pedal body platform assembly (9) being provided with mounting pins (10) for securing the pedal body platform assembly (9) to the pedal body housing (7) and/or for allowing a non-slip support for a shoe sole of a cyclist on the pedal body platform assembly (9).

10. The flat bicycle pedal of claim 9, wherein the pedal body platform assembly (9) comprises a first pedal body platform plate (9A) arranged on one face of the pedal body housing (7) and a second pedal body platform plate (9B) arranged on an opposite face of the pedal body housing (7), the first pedal body platform plate (9A) and the second pedal body platform plate (9B) being provided with mounting pins (10) for securing the first pedal body platform plate (9A) and the second pedal body platform plate (9B) to the pedal body housing (7) and/or for allowing a non-slip support for a shoe sole of a cyclist on the first pedal body platform plate (9A) and on the second pedal body platform plate (9B).

11. The flat bicycle pedal of claim 10, further comprising at least one pedal body spacer (8) arranged on one side of the pedal body housing (7) and sandwiched between the first pedal body platform plate (9A) and the second pedal body platform plate (9B), wherein the mounting pins (10) secure the at least one pedal body spacer (8) to the first and second pedal body platform plates (9A, 9B), wherein preferably the pedal body spacer (8) comprises a first pedal body spacer element (8A) arranged on one side of the pedal body housing (7) and a second pedal body spacer element (8B) arranged on the opposite side of the pedal body housing (7),
wherein preferably the pedal body platform assembly (9) and/or the first and second pedal body platform plates (9A, 9B) are made of metal, in particular stainless steel or titanium, and/or
wherein preferably the pedal body housing (7) and/or the pedal body spacer (8) and/or the first and second pedal body spacer elements (8A, 8B) are made of composite material including a polymer.

12. The flat bicycle pedal of one or more of the preceding claims, wherein the swing axis (X) is perpendicular to the pedal longitudinal axis (A) and/or wherein the outer end (12) of the pedal axle (1) is not threaded and/or wherein the inner bushing assembly (3) has at least two parts and/or wherein a bearing seal (2) preferably made of rubber is provided at the inner end (16) of the pedal axle (1).

13. The flat bicycle pedal of one or more of the preceding claims, wherein the inner bushing assembly (3) is a slider bushing and/or the outer bushing assembly (4) is a slider bushing.

14. The flat bicycle pedal of one or more of the preceding claims, wherein a maximal swing angle of the pedal body housing (7) from the neutral position is at least 4 degrees in at least one direction on the swing plane around the swing axis (X), and preferably at least 10 degrees in at least one direction on the swing plane around the swing axis (X) and/or wherein the adjustment means (11) are arranged on both sides of the neutral position so to allow independent adjustment of a maximal swing angle in each direction on the swing plane.

15. The flat bicycle pedal of one or more of the preceding claims, wherein the outer bushing assembly (4) further includes a first spacer pad (14) interposed between the outer end (12) of the pedal axle (1) and the axle member (5A), and preferably includes a second spacer pad (15) interposed between the first spacer pad (14) and the axle member (5A).

16. The flat bicycle pedal of one or more of the preceding claims, wherein the length of the pedal axle (1) is more than 50% the width of the pedal body platform assembly (9).

17. The flat bicycle pedal of one or more of the preceding claims, wherein the axle member (5A) is seated with in a seat (21) of the pedal body housing (7) and additionally frictionally engages the seat (21), such that the frictional engagement between the axle member (5A) and the seat (21) additionally restrains the movement of the pedal body housing (7) about the swing axis (X) and wherein preferably the frictional engagement between the axle member (5A) and seat (21) further restrains the movement of the pedal body housing (7) about the swing axis (X) such that the movement of the pedal body housing (7) about the swing axis (X) is only possible once a further predefined threshold force has been overcome, and/or wherein the frictional engagement between the axle member (5A) and the seat (21) further restrains the movement of the pedal body housing (7) about the swing axis (X) such that the movement of the pedal body housing (7) about the swing axis (X) is further slowed down.
